(19) **Europäisches Patentamt**
**European Patent Office**
**Office européen des brevets**

(11) **EP 1 488 090 B1**

(12) **EUROPÄISCHE PATENTSCHRIFT**

(45) Veröffentlichungstag und Bekanntmachung des Hinweises auf die Patenterteilung:
**09.01.2008 Patentblatt 2008/02**

(51) Int Cl.:
***F02D 41/38*** *(2006.01)*

(21) Anmeldenummer: **02791605.5**

(22) Anmeldetag: **04.12.2002**

(86) Internationale Anmeldenummer:
**PCT/DE2002/004437**

(87) Internationale Veröffentlichungsnummer:
**WO 2003/078817 (25.09.2003 Gazette 2003/39)**

(54) **VERFAHREN ZUM BETREIBEN EINES KRAFTSTOFFZUMESSSYSTEMS EINES KRAFTFAHRZEUGS, COMPUTERPROGRAMM, STEUERGERÄT UND KRAFTSTOFFZUMESSSYSTEM**

METHOD FOR OPERATING A FUEL MEASUREMENT SYSTEM IN A MOTOR VEHICLE, COMPUTER PROGRAM, CONTROL DEVICE AND FUEL MEASUREMENT SYSTEM

PROCEDE POUR FAIRE FONCTIONNER UN SYSTEME DE DOSAGE DE CARBURANT D'UNE AUTOMOBILE, PROGRAMME INFORMATIQUE, APPAREIL DE COMMANDE ET SYSTEME DE DOSAGE DE CARBURANT

(84) Benannte Vertragsstaaten:
**DE FR**

(30) Priorität: **14.03.2002 DE 10211283**

(43) Veröffentlichungstag der Anmeldung:
**22.12.2004 Patentblatt 2004/52**

(73) Patentinhaber: **ROBERT BOSCH GMBH**
**70442 Stuttgart (DE)**

(72) Erfinder:
• **JOOS, Klaus**
 **74399 Walheim (DE)**

• **FRENZ, Thomas**
 **86720 Noerdlingen (DE)**
• **SCHUMACHER, Matthias**
 **71679 Asperg (DE)**
• **FLUHRER, Bernd**
 **71696 Moeglingen (DE)**
• **HOLLMANN, Timm**
 **71636 Ludwigsburg (DE)**

(56) Entgegenhaltungen:
**EP-A- 0 916 831        EP-A- 1 030 047**
**WO-A-95/23921        US-B1- 6 308 685**

**EP 1 488 090 B1**

**Beschreibung**

Stand der Technik

Die Erfindung betrifft ein Verfahren zum Betreiben eines Kraftstoffzumesssystems eines Kraftfahrzeugs, wobei von wenigstens einer Förderpumpe Kraftstoff in wenigstens einen Hochdruckbereich gefördert wird, wobei der Kraftstoff aus dem Hochdruckbereich mittels wenigstens eines Einspritzventils direkt in wenigstens einen Brennraum eingespritzt wird, wobei wenigstens ein Sensor den Druck im Hochdruckbereich erfasst und wobei wenigstens ein Druckstellglied zur Einstellung des Druckes im Hochdruckbereich vorgesehen ist.

Die Erfindung betrifft weiterhin ein Computerprogramm für eine Brennkraftmaschine eines Kraftfahrzeugs sowie ein Steuergerät zum Betreiben eines Kraftstoffzumesssystems eines Kraftfahrzeugs und ein Kraftstoffzumesssystem für eine Brennkraftmaschine eines Kraftfahrzeugs.

Gattungsgemäße Kraftstoffzumesssysteme für Kraftfahrzeuge sind beispielsweise unter dem Namen Common-Rail-System bekannt. Bei diesen Systemen wird mittels einer ersten Kraftstoffpumpe Kraftstoff aus einem Kraftstoffvorratsbehälter in einen ersten Druckbereich gefördert. Ausgehend von diesem ersten Druckbereich wird der Kraftstoff mittels einer Hochdruckpumpe in ein sogenanntes Common-Rail befördert. In diesem Common-Rail befindet sich der Kraftstoff unter einem sehr hohen Druck. Im Fall eines Diesel-Commom-Rail-Systems, beispielsweise Drücke bis zu 2000 Bar und im Falle eines Benzin-Common-Rail-Systems, beispielsweise Drücke bis zu 150 Bar. Der Kraftstoff wird von dem Commom-Rail aus mittels eines Einspritzventils zu vorgebbaren Zeitpunkten direkt in einen Brennraum der Brennkraftmaschine eingespritzt.

In der Regel ist im Hochdruckbereich, meistens unmittelbar am Common-Rail, ein Druckstellglied, beispielsweise ein Drucksteuerventil o. ä. angeordnet. Dieses Druckstellglied kann von einem Steuergerät, in der Regel das Motorsteuergerät, derart angesteuert werden, dass verschiedene Drücke im Common-Rail darstellbar sind. Die verschiedenen Drücke werden hierbei beispielsweise an die verschiedenen Betriebssituationen angepasst, in denen verschiedene Druckwerte für den optimalen Verbrennungsprozess sinnvoll sind.

Eine besondere Problematik bei einem Common-Rail-System ergibt sich in der Startphase, da im Moment des Startens der Brennkraftmaschine der Druck im Common-Rail im Extremfall lediglich einem Vordruck entspricht. Es ist somit für eine optimale Verbrennung erforderlich, den Druck im Common-Rail möglichst schnell auf den normalen Betriebsdruck anzuheben. Hierzu wird beispielsweise vom Steuergerät mittels des Druckstellgliedes die Einstellung eines maximalen Raildrucks vorgegeben. Während der Phase, in der der Raildruck auf den Normalwert ansteigt, ergibt sich naturgemäß eine sehr große zeitliche Druckänderung im Rail, was die bestimmungsgemäße Zumessung von Kraftstoff erschwert. Durch die transienten Druckverhältnisse im Common-Rail ist es für das Steuergerät nahezu unmöglich, eine Einspritzzeit zu berechnen, die der tatsächlich gewünschten Kraftstoffeinspritzmenge entspricht. Dies resultiert auch mitunter daraus, dass zunächst eine Berechnung der Kraftstoffeinspritzzeit durchgeführt wird und erst im Anschluss das Kraftstoffeinspritzventil entsprechend angesteuert werden kann. Es gibt also eine zeitliche Differenz zwischen der Berechnung der Einspritzung und der eigentlichen Einspritzung selbst. Innerhalb dieser Zeitdauer besteht die Möglichkeit, dass sich aufgrund der transienten Druckverhältnisse im Common-Rail ein anderer Kraftstoffdruck einstellt, als vom Steuergerät bei der Berechnung der Einspritzzeit berücksichtigt.

Aufgabe der Erfindung

Es ist die Aufgabe der vorliegenden Erfindung, ein Verfahren zum Betreiben eines gattungsgemäßen Kraftstoffzumesssystems anzugeben, das die wunschgemäße Zumessung von Kraftstoff gegenüber dem Stand der Technik verbessert.

Lösung und Vorteile der Erfindung

Die Aufgabe wird gelöst durch ein Verfahren zum Betreiben eines Kraftstoffzumesssystems eines Kraftfahrzeugs, gemäss Anspruch 1.

Dadurch, dass der Raildruckgradient auf einen Maximalwert begrenzt wird, wird auch die Genauigkeit der Kraftstoffzumessung erhöht, da sich durch die Begrenzung des Raildruckgradientens eine maximale vorgebbare Raildruckdifferenz zwischen den Zeitpunkten ergibt, in denen eine Kraftstoffeinspritzung berechnet wird und dem Zeitpunkt, zu dem eine Kraftstoffeinspritzung durch Ansteuerung des Kraftstoffeinspritzventils ausgeführt wird.

Eine erste vorteilhafte Weiterbildung der Erfindung sieht vor, dass die Begrenzung der zeitlichen Änderung des Druckes im Hochdruckbereich in Abhängigkeit von einer maximal möglichen Förderung der Förderpumpe erfolgt. Hierbei wird der maximal erlaubte Raildruckgradient vorteilhaft auf einen Wert festgelegt, der im Bereich der physikalisch maximal möglichen Werte des Kraftstoffzumesssystems liegt. Durch diese erfindungsgemäße Maßnahme wird die Regelung des Raildrucks verbessert. Vorteilhaft sind die hierbei zulässigen Druckgradientenwerte in drehzahl- und lastabhängigen Kennfeldern in einem Speicher des Steuergeräts abgelegt. Auf diese Weise kann der maximal zulässige Raildruckgradient in idealer Weise an jede beliebige Betriebssituation angepasst bzw. adaptiert werden.

Das erfindungsgemäße Verfahren sieht vor, dass die Begrenzung der zeitlichen Änderung des Druckes im Hochdruckbereich in Abhängigkeit von einem vorgebbaren Einspritzmengenfehler erfolgt. Durch diese erfindungsgemäße Maßnahme kann in besonders vorteilhafter Weise der maximale Einspritzmengenfehler vorgegeben werden, mit dem mögliche Abgasgrenzwerte gerade noch realisiert werden können. Da sich, wie bereits vorstehend erläutert, praktisch immer eine zeitliche Diskrepanz zwischen der Einspritzzeitberechnung und der tatsächlichen Ansteuerung des Einspritzventils ergibt, führt das erfindungsgemäße Verfahren besonders vorteilhaft zu einem berechenbaren maximalen Einspritzmengenfehler, dadurch, dass der maximale Raildruckgradient begrenzt wird. Besonders vorteilhaft ist die Weiterbildung des erfindungsgemäßen Verfahrens, dass die Begrenzung der zeitlichen Änderung des Drucks im Hochdruckbereich jeweils in einem Zeitraum zwischen zwei Raildruckgradientenberechnungen vorgegeben wird. Hiermit orientiert sich das Verfahren besonders vorteilhaft an dem Raildruckgradientenberechnungtakt, der je nach Drehzahl der Brennkraftmaschine variiert.

Eine vorteilhafte Weiterbildung sieht vor, dass neben der Abhängigkeit vom Einspritzmengenfehler wenigstens der aktuelle Druck im Hochdruckbereich und/oder eine Abtastrate der Druckmessung im Hochdruckbereich und/oder eine Motordrehzahl und/oder spezifische Daten der Förderpumpe bei der Bestimmung der Begrenzung der zeitlichen Änderung des Raildrucks berücksichtigt werden. Unter den spezifischen Daten der Förderpumpe ist hierbei beispielsweise zu verstehen, wieviele Nocken über die Hochdruckpumpe angetrieben werden. Durch diese Berücksichtigung von weiteren Abhängigkeiten wird das erfindungsgemäße Verfahren besonders vorteilhaft an alle wesentlichen Einflussparameter des Kraftstoffzumesssytems angepasst.

Eine besonders bevorzugte Weiterbildung des erfindungsgemäßen Verfahrens sieht vor, dass auf wenigstens zwei verschiedene Arten Begrenzungswerte bestimmt werden, dass durch eine Vergleichsoperation der Minimalwert der Begrenzungswerte ermittelt wird und dass dieser Minimalwert als Begrenzung für die zeitliche Änderung des Druckes im Hochdruckbereich ausgewählt wird. Es wird also der minimale Raildruckgradient ausgewählt, der sich durch verschiedene Bestimmungsarten ergibt. Hierdurch ist zu jedem Zeitpunkt sichergestellt, dass der Raildruckgradient in keiner Betriebssituation kritische Werte überschreitet.

Von besonderer Bedeutung ist die Realisierung des erfindungsgemäßen Verfahrens in Form eines Computerprogramms, das für eine Brennkraftmaschine, insbesondere eines Kraftfahrzeugs, vorgesehen ist. Das Computerprogramm weist eine Abfolge von Befehlen auf, die dazu geeignet sind, das erfindungsgemäße Verfahren durchzuführen, wenn sie auf einem Computer ausgeführt werden.

Weiterhin kann die Abfolge von Befehlen auf einem computerlesbaren Datenträger gespeichert sein, beispielsweise auf einer Diskette, einer CD-ROM, einer DVD, einem sogenannten Flash-Memory oder dergleichen.

In diesen Fällen wird die Erfindung durch das Computerprogramm realisiert, so dass dieses Computerprogramm in gleicher Weise die Erfindung darstellt, wie das Verfahren, zu dessen Ausführung das Computerprogramm geeignet ist. Dies gilt dabei unabhängig davon, ob das Computerprogramm auf einem Speichermedium abgespeichert ist, oder ob es als solches - also unabhängig von einem Speichermedium - vorhanden ist.

Die Aufgabe wird weiterhin gelöst durch ein Steuergerät zum Betreiben eines Kraftstoffzumesssystems gemäß Anspruch 8.

Die Aufgabe wird weiterhin gelöst durch ein Kraftstoffzumesssystem für eine Brennkraftmaschine gemäß Anspruch 9.

Weitere Anwendungsmöglichkeiten und Vorteile der Erfindung ergeben sich aus der nachfolgenden Beschreibung von Ausführungsbeispielen der Erfindung, die in den Figuren gezeigt sind.

Ausführungsbeispiele der Erfindung

Figur 1    zeigt ein erfindungsgemäßes Steuergerät sowie ein erfindungsgemäßes Kraftstoffzumesssystem für eine Brennkraftmaschine,

Figur 2    zeigt ein erstes Ausführungsbeispiel des erfindungsgemäßen Verfahrens,

Figur 3    zeigt ein zweites Ausführungsbeispiel des erfindungsgemäßen Verfahrens und

Figur 4    zeigt ein mögliches Ablaufdiagramm des erfindungsgemäßen Verfahrens.

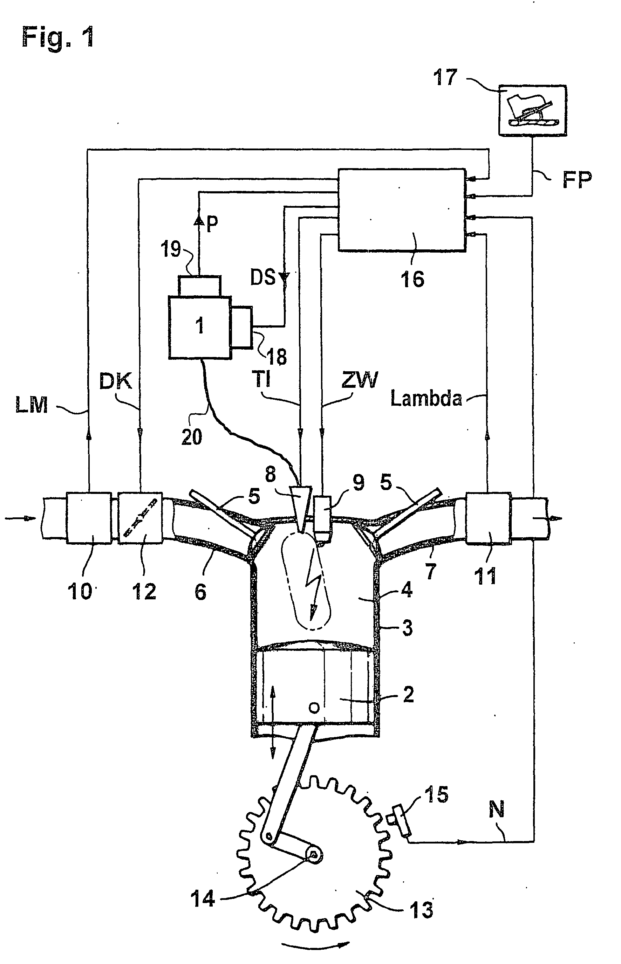

Figur 1 zeigt ein erfindungsgemäßes Steuergerät 16, das eine Brennkraftmaschine ansteuert. Bei der Brennkraftmaschine ist ein Kolben 2 in einem Zylinder 3 hin- und herbewegbar. Der Zylinder 3 ist mit einem Brennraum 4 versehen, an den über Ventile 5 ein Ansaugrohr 6 und ein Abgasrohr 7 angeschlossen sind. Des Weiteren sind mit dem Brennraum 4 ein mit dem Signal TI ansteuerbares Einspritzventil 8 und eine mit einem Signal ZW ansteuerbare Zündkerze 9 verbunden. Die Signale TI und ZW werden hierbei von dem Steuergerät 16 an das Einspritzventil 8 bzw. die Zündkerze 9 übertragen.

Das Ansaugrohr 6 ist mit einem Luftmassensensor 10 und das Abgasrohr 7 mit einem Lambdasensor 11 versehen. Der Luftmassensensor 10 misst die Luftmasse der dem Ansaugrohr 6 zugeführten Frischluft und erzeugt in Abhängigkeit davon ein Signal LM. Der Lambdasensor 11 misst den Sauerstoffgehalt des Abgases in dem Abgasrohr 7 und erzeugt in Abhängigkeit davon ein Signal Lambda. Die Signale des Luftmassensensors 10 und des Lambdasensors 11 werden dem Steuergerät 16 zugeführt.

In dem Ansaugrohr 6 ist eine Drosselklappe 12 untergebracht, deren Drehstellung mittels eines Signals DK einstellbar ist. Weiterhin kann das Abgasrohr 7 über eine hier nicht dargestellte Abgasrückführungsleitung (AGR) mit dem Ansaugrohr 6 verbunden sein. Die Steuerung der Abgasrückführung kann beispielsweise über ein von dem Steuergerät 16 ansteuerbares, hier ebenfalls nicht dargestelltes, Abgasrückführventil erfolgen.

Das erfindungsgemäße Verfahren kann sowohl bei einer Dieselals auch bei einer Benzinbrennkraftmaschine Anwendung finden. Im Rahmen dieses Ausführungsbeispiels ist das erfindungsgemäße Verfahren anhand einer direkteinspritzenden Benzinbrennkraftmaschine beschrieben. Eine solche direkteinspritzende Benzinbrennkraftmaschine kann in verschiedenen Betriebsarten betrieben werden. In einer ersten Betriebsart, dem Homogenbetrieb der Brennkraftmaschine, wird die Drosselklappe 12 in Abhängigkeit von der erwünschten, zugeführten Luftmasse teilweise geöffnet bzw. geschlossen. Der Kraftstoff wird von dem Einspritzventil 8 während einer durch den Kolben 2 hervorgerufenen Ansaugphase in den Brennraum 4 eingespritzt. Durch die gleichzeitig angesaugte Luft wird der eingespritzte Kraftstoff verwirbelt und damit im Brennraum 4 im Wesentlichen gleichmäßig/homogen verteilt. Danach wird das Kraftstoffluftgemisch während der Verdichtungsphase verdichtet, um dann von der Zündkerze 9 entzündet zu werden. Durch die Ausdehnung des entzündeten Kraftstoffs wird der Kolben 2 angetrieben. In dieser ersten Betriebsart, dem Homogenbetrieb, ist das Drehmoment der Brennkraftmaschine im Wesentlichen proportional zur zugeführten Luftmasse, weshalb diese Betriebsart auch als luftgeführt bezeichnet wird.

In einer zweiten Betriebsart, dem Schichtbetrieb der Brennkraftmaschine, wird die Drosselklappe 12 weit geöffnet. Der Kraftstoff wird von dem Einspritzventil 8 während einer durch den Kolben 2 hervorgerufenen Verdichtungsphase in den Brennraum eingespritzt. Dann wird mit Hilfe der Zündkerze 9 der Kraftstoff entzündet, so dass der Kolben 2 in der nunmehr folgenden Arbeitsphase durch die Ausdehnung des entzündeten Kraftstoffs angetrieben wird. In dieser zweiten Betriebsart ist das von der Brennkraftmaschine erzeugte Drehmoment im Wesentlichen abhängig von der in dem Brennraum 4 eingebrachten Kraftstoffmasse. Deshalb wird diese zweite Betriebsart, der Schichtbetrieb, auch als kraftstoffgeführte Betriebsart bezeichnet. Insbesondere in dieser zweiten Betriebsart erlangt somit das erfindungsgemäße Verfahren besondere Bedeutung.

Die Brennkraftmaschine kann mit Hilfe des Steuergerätes zwischen den verschiedenen Betriebsarten umschalten. In allen Betriebsarten wird durch den angetriebenen Kolben 2 eine Kurbelwelle 14 in eine Drehbewegung versetzt, über die letztendlich die Räder des Kraftfahrzeugs angetrieben werden. Auf der Kurbelwelle 14 ist ein Zahnrad angeordnet, durch das die Zähne von einem unmittelbar gegenüber angeordneten Drehzahlsensor 15 abgetastet werden. Der Drehzahlsensor 15 erzeugt ein Signal, aus dem die Drehzahl N der Kurbelwelle 14 ermittelt wird und übermittelt dieses Signal N an das Steuergerät 16.

In allen Betriebsarten wird die von dem Einspritzventil 8 in den Brennraum eingespritzte Kraftstoffmasse von dem Steuergerät 16, insbesondere im Hinblick auf einen geringen Kraftstoffverbrauch und/oder eine geringe Schadstoffentwicklung und/oder ein gewünschtes Sollmoment gesteuert und/oder geregelt. Auch die erfindungsgemäße Begrenzung der zeitlichen Änderung des Druckes im Hochdruckbereich in Abhängigkeit von verschiedenen Faktoren erfolgt in dem Steuergerät 16. Zu diesem Zweck ist das Steuergerät 16 mit einem Mikroprozessor versehen, der in einem Speichermedium Programmcode abgespeichert hat, der dazu geeignet ist, die gesamte erfindungsgemäße Steuerung des Kraftstoffzumesssystems durchzuführen.

Das Steuergerät 16 nach Figur 1 ist weiterhin mit einem Fahrpedalsensor 17 verbunden, der ein Signal FP erzeugt, das die Stellung eines von einem Fahrer betätigbaren Fahrpedals/Gaspedals und damit das von dem Fahrer angeforderte Moment angibt. Entsprechend weiterer Betriebsbedingungen und dem vom Fahrer angeforderten Moment wird vom Steuergerät 16 die aktuell auszuführende Betriebsart ausgewählt und entsprechend angesteuert und/oder geregelt.

Sowohl bei einer direkteinspritzenden Diesel- als auch bei einer direkteinspritzenden Benzinbrennkraftmaschine wird der Kraftstoff mit Hochdruck über das Einspritzventil 8 in den Brennraum 4 eingespritzt. Im Ausführungsbeispiel nach Figur 1 ist ein sogenanntes Common-Rail mit 1 bezeichnet. Das Common-Rail 1, in dem der Kraftstoff unter Hochdruck steht, ist über eine Verbindungsleitung 20 mit dem Einspritzventil 8 verbunden. An dem Common-Rail 1 sind ein Druckstellglied 18 und ein Drucksensor 19 angeordnet. Das Druckstellglied wird mittels eines Signals DS vom Steuergerät 16 angesteuert, um einen gewünschten Druck bzw. einen gewünschten Raildruckgradienten, im Common-Rail 1 zu realisieren. Der aktuelle Druck im Common-Rail wird vom Drucksensor 19 gemessen und das Drucksignal P an das Steuergerät 16 übertragen. In der Darstellung nach Figur 1 wurde auf die Darstellung einer Vorförderpumpe, die den Kraftstoff aus dem Tank des Kraftfahrzeug in einen Niederdruckbereich fördert, und auf eine Hochdruckförderpumpe, die den Kraftstoff aus dem Niederdruckbereich in das Common-Rail fördert, verzichtet, da dies nicht erfindungswesentlich ist.

Weiterhin nicht dargestellt ist eine Rücklaufleitung, die das Druckstellglied 18 mit dem Niederdruckbereich verbindet. Über diese Rücklaufleitung ist es dem Druckstellglied möglich, je nach Ansteuersignal DS eine bestimmte Kraftstoffmasse aus dem Common-Rail, wo der Kraftstoff unter Hochdruck steht, zurück in den Niederdruckbereich zu entspannen. Auf diese Weise kann vom Druckstellglied Einfluss auf den Druck im Common-Rail genommen werden. Die Erfindung ist hierbei nicht auf ein spezifisches Druckstellglied beschränkt, sondern arbeitet prinzipiell mit jeder Vorrichtung zusammen, die es vermag, den Druck im Common-Rail zu variieren.

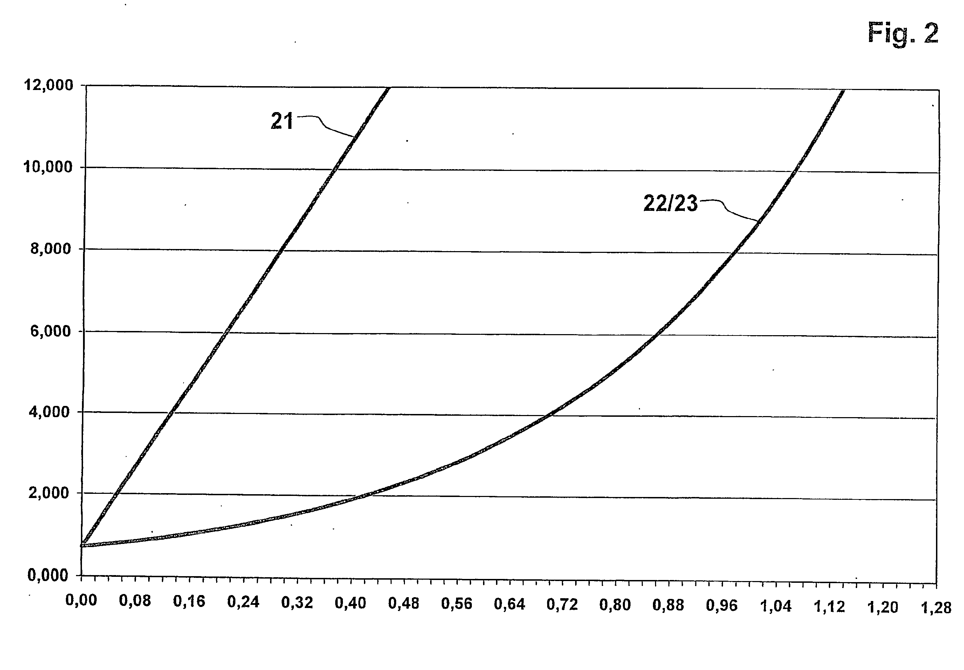

Das in dem Steuergerät 16 implementierte erfindungsgemäße Verfahren wird im Rahmen der nachfolgenden Figuren 2, 3 und 4 eingehender erläutert.

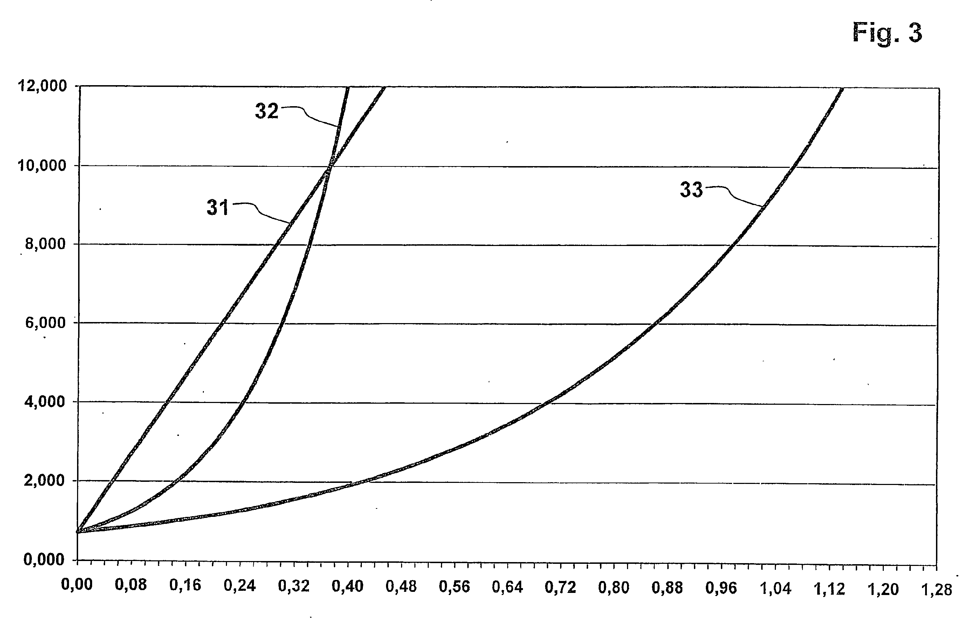

Figur 2 zeigt ein erstes Ausführungsbeispiel des erfindungsgemäßen Verfahrens. In der Darstellung nach Figur 2 ist auf der waagerechten Achse die Zeit T in Sekunden und auf der senkrechten Achse der Raildruck P in Megapascal dargestellt. Die gezeigten Kurvenverläufe 21, 22 und 23 stellen erfindungsgemäß begrenzte Raildruckanstiege dar. Das Ausführungsbeispiel nach Figur 2 gilt hierbei für eine Motorumdrehungszahl N von 1000 Umdrehungen pro Minute. Praktisch könnte Figur 2 einen Raildruckaufbau nach einem Motorstart darstellen, wobei der Motor im Stillstand des Kraftfahrzeugs mit einer Leerlaufdrehzahl von 1000 Umdrehungen pro Minute betrieben wird. Der Raildruck zum Zeitpunkt T=0 entspricht sowohl in Figur 2 als auch in der nachfolgenden Figur 3 dem Vordruck, der beispielsweise durch eine elektrische betriebene Kraftstoffpumpe (EKP) erzeugt wird.

Es gibt im Rahmen dieser Erfindung verschiedene Möglichkeiten, den Raildruck P bzw. den Raildruckgradienten auf einen maximalen Wert zu begrenzen. Im Weiteren werden drei verschiedene Möglichkeiten zur Bestimmung eines maximalen Raildruckgradienten dargelegt.

In der Darstellung nach Figur 2 ist erkennbar, dass die Kurvenverläufe 22 und 23 identisch sind. Dies liegt daran, dass die Bestimmung des maximalen Raildruckgradienten unter den in Figur 2 gegebenen Betriebsbedingungen (insbesondere Motorumdrehungszahl N von 1000 Umdrehungen pro Minute) bei diesen beiden Bestimmungsmöglichkeiten des Raildruckgradienten zu dem gleichen Ergebnis führt.

Der Kurvenverlauf 21 stellt eine erste Möglichkeit dar, den Raildruckgradienten auf einen Maximalwert zu begrenzen. In dieser ersten Variante wird der Raildruckgradient in Abhängigkeit von einer maximal möglichen Förderung der Hochdruckpumpe begrenzt. Systembedingt könnte die Hochdruckpumpe im Wesentlichen keinen höheren Raildruckanstieg realisieren, als dies mit dem Kurvenverlauf 21 gezeigt ist. Zur Unterstützung der Raildruckregelung ist es jedoch sinnvoll, den Raildruckgradienten steuerungstechnisch zu begrenzen. Die wesentlichen Einflussfaktoren hierbei sind die Drehzahl N und die Last der Brennkraftmaschine im aktuellen Betriebspunkt. Dementsprechend, da das Förderverhalten der Förderpumpe bzw. der Hochdruckpumpe bekannt ist, sind in einem Speicher des Steuergeräts 16 zulässige Druckgradientenwerte in drehzahl- und lastabhängigen Kennfeldern abgelegt.

Der Kurvenverlauf 22 in Figur 2 stellt eine zweite Möglichkeit zur Begrenzung der zeitlichen Änderung des Drucks im Hochdruckbereich dar. Hierbei wird, ebenso wie beim Kurvenverlauf 23, die Begrenzung im Wesentlichen von einem vorgebbaren Einspritzmengenfehler EMF abhängig gemacht. Weitere Eingangsgrößen zur Berechnung der Begrenzung des Raildruckgradientens sind die Anzahl der Nocken AN, über die die Hochdruckpumpe angetrieben wird, die Motordrehzahl N, der aktuelle Raildruck P sowie das Rechenraster TR. Unter dem Rechenraster TR ist die Zeit zu verstehen, die zwischen zwei Zeitpunkten vergeht, zu denen eine Raildruckgradientenberechnung durchgeführt wird. Bezogen auf das Rechenraster TR ergibt sich somit eine zulässige Änderung des Raildrucks Delta_P nach folgender Formel:

$$\text{Delta\_P / TR = P * ( EMF * EMF - 1 ) * TR * N * AN / 120}$$

Der aktuelle Raildruck P, den obige Formel einschließt, wird beispielsweise mit dem Drucksensor 19 nach Figur 1 erfasst. Da der Raildruck P nur zu diskreten Zeitpunkten erfasst wird, ist der Einfluss der Abtastzeit TA insbesondere bei größeren Motordrehzahlen N nicht mehr vernachlässigbar. Insbesondere bei hohen Motordrehzahlen N und in Abhängigkeit von der Abtastfrequenz TA des Raildrucks P ist eine Begrenzung des Raildruckgradienten bezogen auf die doppelte Abtastfrequenz 2 * TA zweckmäßig. Dies ist die für den Kurvenverlauf 23 verwendete Berechnungsmethodik. Im Detail ergibt sich somit die maximal zulässige Raildruckänderung je Rechenraster TR nach der folgenden Formel:

$$\text{Delta\_P / TR = P * ( EMF * EMF - 1 ) * TR / ( 2 * TA)}$$

Im Bereich niedriger Drehzahlen N, wie in Figur 2 mit 1000 Umdrehungen pro Minute, ergibt sich für die beiden Berechnungsformeln der gleiche Raildruckverlauf, so dass die Kurvenverläufe 22 und 23 identisch sind. In der Darstellung nach Figur 2 entspricht der Kurvenverlauf 21 beispielsweise einem konstanten Raildruckgradienten von 0,5 Megapascal je 20 Millisekunden. Der Kurvenverlauf 22 entspricht einem maximalen Einspritzmengenfehler EMF von 5% je Förderzyklus TZ der Hochdruckpumpe. Der Kurvenverlauf 23 entspricht einem maximalen Einspritzmengenfehler EMF von 5% je doppelter Abtastfrequenz 2 * TA des Raildrucks P.

Figur 3 zeigt ein zweites Ausführungsbeispiel des erfindungsgemäßen Verfahrens. Im Gegensatz zur Darstellung nach Figur 2 ist hierbei ein Druckanstieg im Common-Rail bei einer Motorumdrehungszahl N von 3000 Umdrehungen pro Minute dargestellt. Die Kurve 31 entspricht hierbei, ebenso wie Kurve 21 nach Figur 2, einem konstanten Raildruckgradienten von 0,5 Megapascal je 20 Millisekunden. Die Kurve 32 entspricht, ebenso wie Kurve 22 nach Figur 2, einem maximalen Einspritzmengenfehler EMF von 5% je Förderzyklus TZ der Hochdruckpumpe. Der Kurvenverlauf 33 entspricht, ebenso wie der Kurvenverlauf 23 nach Figur 2, einem maximalen Einspritzmengenfehler EMF von 5% je doppelter Abtastfrequenz 2 * TA. Im Gegensatz zur Darstellung nach Figur 2 wird in Figur 3 der Einfluss der höheren Drehzahl N auf die Berechnungsmöglichkeiten 2 und 3 deutlich.

Es ist sowohl in Figur 2 als auch in Figur 3 zu erkennen, dass der zulässige Raildruckgradient mit steigendem Raildruck P zunimmt. Dies ist durch ein Abnehmen des relativen Einspritzmengenfehlers bei zunehmendem Raildruck P und konstantem Raildruckgradienten bedingt. Erfindungsgemäß wird zu jedem Zeitpunkt T derjenige Raildruckverlauf für die Steuerung vom Steuergerät 16 ausgewählt, die den geringsten Raildruckgradienten aufweist. Dies sind in Figur 2 die Kurvenverläufe 22 und 23 gemeinsam und in Figur 3 der Kurvenverlauf 33. Insgesamt ist der Raildruckaufbau mit der erfindungsgemäßen einspritzmengenfehlerabhängigen maximalen Raildruckgradientenauswahl, insbesondere bei niedrigen Raildrücken, deutlich langsamer als Systeme nach dem Stand der Technik. Es wird jedoch eine Einhaltung eines zulässigen Einspritzmengenfehlers garantiert, was mit Blick auf die Einhaltung von aktuellen und zukünftigen Abgasrichtlinien zwingend erforderlich ist.

Die besonderen Vorteile des erfindungsgemäßen Verfahrens liegen in Betriebspunkten, in denen es zu einem schnellen Druckaufbau mit hohem Raildruckgradienten kommt, wie dies beispielsweise in der Nachstartphase oder bei einem Raildrucksollwertsprung der Fall ist. In diesen Fällen werden mit dem erfindungsgemäßen Verfahren die zulässigen Lambdagrenzwerte eingehalten, was auch durch Vermessen des Lambdawertes und parallelem Beobachten des Raildruckgradientens bei einem schnellen Druckaufbau belegbar ist.

Das erfindungsgemäße Verfahren kann, wie vorstehend bereits erläutert, in jeder Betriebssituation des Kraftstoffversorgungssystems eingesetzt werden, in der ein Raildrucksollwertsprung erfolgt.

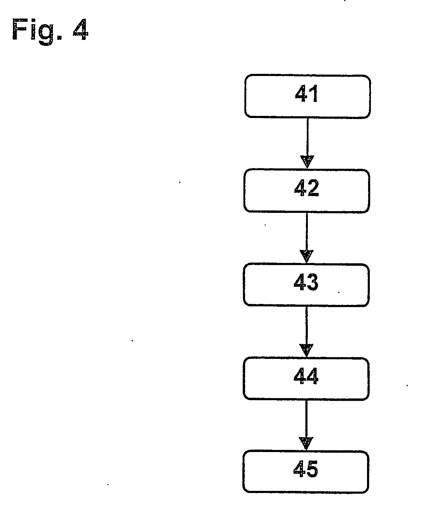

Figur 4 zeigt ein Ausführungsbeispiel des erfindungsgemäßen Verfahrens in Form eines Ablaufplanes. Hierbei werden in einem ersten Schritt 41 Eingangswerte vom Steuergerät 16 erfasst bzw. aus dem Speicher am Steuergerät ausgelesen. Diese Eingangsgrößen für die nachfolgende Berechnung sind z. B. der Raildruck-Istwert, die Abtastzeit des Raildrucks TA, der zulässige Einspritzmengenfehler, das Rechenraster TR, die Anzahl der Nocken, mit denen die Hochdruckpumpe angetrieben wird, die Zykluszeit TZ des Förderzyklusses der Förderpumpe und die Drehzahl der Brennkraftmaschine. An den Schritt 41 schließt sich ein Schritt 42 an, in dem zunächst überprüft wird, ob die Drehzahl der Brennkraftmaschine oberhalb eines vorgebbaren Schwellenwertes liegt. Je nachdem, ob die Drehzahl oberhalb oder unterhalb des bestimmten Schwellenwertes liegt, wird zwischen den zwei zuvor genannten unterschiedlichen Berechnungsformeln zur Begrenzung des Raildruckgradientens in Abhängigkeit von einem vorgebbaren Einspritzmengenfehler EMF unterschieden.

An den Schritt 42 schließt sich der Schritt 43 an, in dem im Steuergerät in Abhängigkeit von der Drehzahl N der Brennkraftmaschine und der aktuellen Last der Brennkraftmaschine aus einem Kennfeld ein applizierter maximaler Raildruckgradient ausgelesen wird. Im anschließenden Schritt 44 findet eine Minimalwertauswahl zwischen den bestimmten maximalen Raildruckgradienten nach Schritt 43 und Schritt 42 statt. An den Schritt 44 schließt sich der Schritt 45 an, in dem die Ansteuerung des Druckstellglieds 18 entsprechend des maximalen Raildruckgradientens erfolgt, der im Schritt 44 ausgewählt wurde.

Theoretisch besteht eine weitere Lösung der Aufgabe darin, den Raildruck mit aufwendigen Berechnungsmitteln im Voraus zu prädizieren, was allerdings extrem aufwändig und dementsprechend rechenintensiv ist. Diese Möglichkeit übersteigt die dem derzeitigen Stand der Technik entsprechenden Steuergeräte zum Betreiben eines Kraftstoffzumesssystems deutlich. Im Vergleich hierzu stellt die erfindungsgemäße Möglichkeit der Begrenzung des maximalen Raildruckgradientens eine einfache und sichere Lösung dar, die zudem noch kostengünstig ist, da keine zusätzlichen Hardwarekomponenten erforderlich sind.

Abschließend wird nochmals darauf hingewiesen, dass das erfindungsgemäße Verfahren sowohl bei einer Benzin- als auch bei einer Dieselbrennkraftmaschine eingesetzt werden kann. Es liegt im Ermessen des Fachmanns, das erfindungsgemäße Verfahren an die in den verschiedenen Systemen vorherrschenden unterschiedlich hohen Raildrücke anzupassen.

## Patentansprüche

1. Verfahren zum Betreiben eines Kraftstoffzumesssystems eines Kraftfahrzeugs, wobei von wenigstens einer Förderpumpe Kraftstoff in wenigstens einen Hochdruckbereich (1) gefördert wird, wobei der Kraftstoff aus dem Hochdruckbereich (1) mittels wenigstens eines Einspritzventils (8) direkt in wenigstens einen Brennraum (4) eingespritzt wird, wobei wenigstens ein Sensor (19) den Druck (P) im Hochdruckbereich erfasst, wobei wenigstens ein Druckstellglied (18) zur Einstellung des Druckes im Hochdruckbereich (1) vorgesehen ist, wobei zunächst anhand des erfassten Drucks (P) eine Einspritzzeit gemäß einer gewünschten Einspritzmenge berechnet wird, und im Anschluss das Kraftstoffeinspritzventil entsprechend angesteuert wird, wobei sich ein Einspritzmengenfehler (EMF) ergibt, wenn sich der Druck zum Zeitpunkt der Ansteuerung des Kraftstoffeinspritzventils und der zur Berechnung der Einspritzzeit erfasste Druck unterscheiden, **dadurch gekennzeichnet, dass** die zeitliche Änderung des Drucks im Hochdruckbereich (1) durch Ansteuerung des Druckstellglieds (18) in Abhängigkeit von einem vorgebbaren Einspritzmengenfehler (EMF) begrenzt wird.

2. Verfahren nach Anspruch 1, **dadurch gekennzeichnet, dass** zulässige Druckgradientenwerte in drehzahl- und lastabhängigen Kennfeldern abgelegt sind.

3. Verfahren einem der vorhergehenden Ansprüche, **dadurch gekennzeichnet, dass** die Begrenzung jeweils für einen Zeitraum (TR) zwischen zwei Raildruckgradientenberechnungen vorgegeben wird.

4. Verfahren einem der vorhergehenden Ansprüche, **dadurch gekennzeichnet, dass** die Begrenzung wenigstens in Abhängigkeit von einem aktuellen Druck (P) im Hochdruckbereich (1) und/oder einer Abtastrate (TA) der Druckmessung im Hochdruckbereich (1) und/oder einer Motordrehzahl (N) und/oder spezifischer Daten der Förderpumpe (AN) erfolgt.

5. Verfahren einem der vorhergehenden Ansprüche, **dadurch gekennzeichnet, dass** auf wenigstens zwei verschiedene Arten Begrenzungswerte bestimmt werden, dass durch eine Vergleichsoperation der Minimalwert der Begrenzungswerte ermittelt wird, und dass dieser Minimalwert als Begrenzung für die zeitliche Änderung des Druckes im Hochdruckbereich (1) ausgewählt wird.

6. Computerprogramm für eine Brennkraftmaschine eines Kraftfahrzeugs, mit einer Abfolge von Befehlen, die dazu geeignet sind, das Verfahren nach einem der Ansprüche 1 bis 5 durchzuführen, wenn sie auf einem Computer, insbesondere einem Steuergerät für eine Brennkraftmaschine, ausgeführt werden.

7. Computerprogramm nach Anspruch 8, wobei die Abfolge von Befehlen auf einem computerlesbaren Datenträger gespeichert ist.

8. Steuergerät zum Betreiben eines Kraftstoffzumesssystems eines Kraftfahrzeugs, wobei von wenigstens einer Förderpumpe Kraftstoff in wenigstens einen Hochdruckbereich (1) gefördert wird, wobei der Kraftstoff aus dem Hochdruckbereich (1) mittels wenigstens eines Einspritzventils (8) direkt in wenigstens einen Brennraum (4) eingespritzt wird, wobei wenigstens ein Sensor (19) den Druck (P) im Hochdruckbereich, wobei wenigstens ein Druckstellglied (18) zur Einstellung des Druckes im Hochdruckbereich (I) vorgesehen ist, wobei zunächst anhand des erfassten Drucks (P) eine Einspritzzeit gemäß einer gewünschten Einspritzmenge berechnet wird, und im Anschluss das Kraftstoffeinspritzventil entsprechend angesteuert wird, wobei sich ein Einspritzmengenfehler (EMF) ergibt, wenn sich der Druck zum Zeitpunkt der Ansteuerung des Kraftstoffeinspritzventils und der zur Berechnung der Einspritzzeit erfasste Druck unterscheiden, **dadurch gekennzeichnet, dass** die zeitliche Änderung des Druckes im Hochdruckbereich (1) durch Ansteuerung des Druckstellglieds (18) in Abhängigkeit von einem vorgebbaren Einspritzmengenfehler (EMF) begrenzbar ist.

9. Kraftstoffzumesssystem für eine Brennkraftmaschine eines Kraftfahrzeugs, mit wenigstens einer Förderpumpe zur Förderung von Kraftstoff in wenigstens einen Hochdruckbereich (1), mit wenigstens einem Einspritzventil (8) zur direkten Einspritzung des Kraftstoffs aus dem Hochdruckbereich (1) in wenigstens einen Brennraum (4), mit wenigstens einem Sensor (19) zur Erfassung des Druckes (P) im Hochdruckbereich, wobei wenigstens ein Druckstellglied (18) zur Einstellung des Druckes im Hochdruckbereich (1) vorgesehen ist, wobei zunächst anhand des erfassten Drucks (P) eine Einspritzzeit gemäß einer gewünschten Einspritzmenge berechnet wird, und im Anschluss das Kraftstoffeinspritzventil entsprechend angesteuert wird, wobei sich ein Einspritzmengenfehler (EMF) ergibt, wenn sich der Druck zum Zeitpunkt der Ansteuerung des Kraftstoffeinspritzventils und der zur Berechnung der Einspritzzeit erfasste Druck unterscheiden, **dadurch gekennzeichnet, dass** die zeitliche Änderung des Druckes im Hochdruckbereich (1) durch Ansteuerung des Druckstellglieds (18) in Abhängigkeit von einem vorgebbaren Einspritzmengenfehler (EMF) begrenzbar ist.

**EP 1 488 090 B1**

**Claims**

1. Method for operating a fuel metering system of a motor vehicle, with fuel being delivered by at least one delivery pump into at least one high-pressure region (1), with the fuel being injected from the high-pressure region (1) directly into at least one combustion chamber (4) by means of at least one injection valve (8), with at least one sensor (19) measuring the pressure (P) in the high-pressure region, with at least one pressure actuator (18) for setting the pressure in the high-pressure region (1) being provided, with an injection time being calculated, according to a desired injection quantity, initially on the basis of the measured pressure (P), and the fuel injection valve subsequently being correspondingly activated, with an injection quantity error (EMF) being generated if the pressure at the time of the activation of the fuel injection valve and the pressure measured for the calculation of the injection time differ, **characterized in that** the change of the pressure in the high-pressure region (1) with time is limited by the activation of the pressure actuator (18) as a function of a predefinable injection quantity error (EMF).

2. Method according to Claim 1, **characterized in that** the permissible pressure gradient values are stored in engine-speed-dependent and load-dependent characteristic diagrams.

3. Method according to one of the preceding claims, **characterized in that** the limitation is predefined in each case for a timespan (TS) between two rail pressure gradient calculations.

4. Method according to one of the preceding claims, **characterized in that** the limitation takes place at least as a function of a present pressure (P) in the high-pressure region (1) and/or as a function of a sensing rate (TA) of the pressure measurement in the high-pressure region (1) and/or as a function of an engine speed (N) and/or as a function of specific data of the delivery pump (AN).

5. Method according to one of the preceding claims, **characterized in that** limiting values are determined on at least two different types, **in that** the minimum value of the limiting values is determined by means of a comparative operation, and **in that** said minimum value is selected as a limitation for the change in the pressure in the high-pressure region (1) with time.

6. Computer program for an internal combustion engine of a motor vehicle, having a sequence of commands which are suitable for carrying out the method according to one of Claims 1 to 5 when they are executed on a computer, in particular a control unit for an internal combustion engine.

7. Computer program according to Claim 8, with the sequence of commands being stored on a computer-readable data carrier.

8. Control unit for operating a fuel metering system of a motor vehicle, with fuel being delivered by at least one delivery pump into at least one high-pressure region (1), with the fuel being injected from the high-pressure region (1) directly into at least one combustion chamber (4) by means of at least one injection valve (8), with at least one sensor (19) measuring the pressure (P) in the high-pressure region, with at least one pressure actuator (18) for setting the pressure in the high-pressure region (1) being provided, with an injection time being calculated, according to a desired injection quantity, initially on the basis of the measured pressure (P), and the fuel injection valve subsequently being correspondingly activated, with an injection quantity error (EMF) being generated if the pressure at the time of the activation of the fuel injection valve and the pressure measured for the calculation of the injection time differ, **characterized in that** the change of the pressure in the high-pressure region (1) with time can be limited by the activation of the pressure actuator (18) as a function of a predefinable injection quantity error (EMF).

9. Fuel metering system for an internal combustion engine of a motor vehicle, having at least one delivery pump for delivering fuel into at least one high-pressure region (1), having at least one injection valve (8) for directly injecting the fuel from the high-pressure region (1) into at least one combustion chamber (4), having at least one sensor (19) for measuring the pressure (P) in the high-pressure region, with at least one pressure actuator (18) for setting the pressure in the high-pressure region (1) being provided, with an injection time being calculated, according to a desired injection quantity, initially on the basis of the measured pressure (P), and the fuel injection valve subsequently being correspondingly activated, with an injection quantity error (EMF) being generated if the pressure at the time of the activation of the fuel injection valve and the pressure measured for the calculation of the injection time differ, **characterized in that** the change of the pressure in the high-pressure region (1) with time can be limited by the activation of the pressure actuator (18) as a function of a predefinable injection quantity error (EMF).

**Revendications**

1. Procédé de gestion d'un système de dosage de carburant d'un véhicule automobile selon lequel
   au moins une pompe débite du carburant dans au moins une zone haute pression (1),
   le carburant est injecté directement dans au moins une chambre de combustion (4) à partir de la zone haute pression (1) à l'aide d'au moins un injecteur (8),
   au moins un capteur (19) saisit la pression (P) dans la zone haute pression,
   au moins un organe de réglage de pression (18) règle la pression dans la zone haute pression (1),
   et tout d'abord à l'aide de la pression (P) saisie, on calcule une durée d'injection selon une dose souhaitée pour l'injection et ensuite on commande l'injecteur de manière correspondante,
   cela se traduit par une erreur de dose d'injection (EMF) si la pression à l'instant de la commande de l'injecteur et la pression saisie pour le calcul de la durée d'injection sont différentes,
   **caractérisé en ce qu'**
   on limite la variation dans le temps de la pression dans la zone haute pression (1) par la commande de l'organe de réglage de pression (18) en fonction d'une erreur prédéfinie de dose d'injection (EMF).

2. Procédé selon la revendication 1,
   **caractérisé en ce que**
   des valeurs autorisées de gradients de pression sont enregistrées dans des champs de caractéristiques dépendant de la vitesse de rotation et de la charge.

3. Procédé selon l'une des revendications précédentes,
   **caractérisé en ce que**
   la limitation est prévue chaque fois pour une durée (TR) comprise entre deux calculs de gradients de pression de rampe commune.

4. Procédé selon l'une des revendications précédentes,
   **caractérisé en ce que**
   la limitation se fait au moins en fonction de la pression actuelle (P) dans la zone haute pression (1) et/ou d'un taux de détection (TA) de la mesure de pression de la zone haute pression (1) et/ou d'une vitesse de rotation de moteur (N) et/ou de données spécifiques de la pompe de transfert (AN).

5. Procédé selon l'une des revendications précédentes,
   **caractérisé en ce qu'**
   on définit des valeurs limites suivant au moins deux types différents et par une comparaison, on détermine la valeur minimale des valeurs limites et on sélectionne cette valeur minimale comme limitation pour la variation dans le temps de la pression dans la zone haute pression (1).

6. Programme d'ordinateur pour un moteur à combustion interne d'un véhicule automobile avec une succession de commandes permettant d'exécuter le procédé selon l'une des revendications 1 à 5 lorsque ces commandes sont exécutées par un ordinateur, notamment l'appareil de commande d'un moteur à combustion interne.

7. Programme d'ordinateur selon la revendication 8,
   selon lequel la succession des commandes est enregistrée en mémoire sur un support de données qui peut être lu par un ordinateur.

8. Appareil de commande pour la gestion d'un système de dosage de carburant d'un véhicule automobile selon lequel
   au moins une pompe de transfert débite du carburant dans au moins une zone haute pression (1),
   le carburant est injecté directement dans une chambre de combustion (4) à partir de la zone haute pression (1) par au moins un injecteur (8),
   au moins un capteur (19) définit la pression (P) dans la zone haute pression,
   au moins un capteur (19) définit la pression (P) dans la zone haute pression,
   au moins un organe de réglage de pression (18) réglant la pression dans la zone haute pression (1),
   et tout d'abord à l'aide de la pression saisie (P) on calcule une durée d'injection selon la dose que l'on souhaite injecter et ensuite on commande l'injecteur de carburant de façon correspondante,
   une ereur de dose d'injection (EMF) résultant de la différence entre la pression à l'instant de la commande de l'injecteur de carburant et la pression utilisée pour le calcul de la durée d'injection,
   **caractérisé en ce qu'**

on limite la variation dans le temps de la pression dans la zone haute pression (1) par la commande de l'organe de réglage de pression (18) en fonction d'une erreur prédéfinie de dose d'injection (EMF).

9. Système de dosage de carburant d'un moteur à combustion interne d'un véhicule automobile ayant au moins une pompe de transfert pour débiter du carburant dans au moins une zone haute pression (1), avec au moins un injecteur (8) pour injecter directement le carburant de la zone haute pression (1) dans au moins une chambre de combustion (4), au moins un capteur (19) pour détecter la pression (P) dans la zone haute pression, au moins un organe de réglage de pression (18) pour régler la pression dans la zone haute pression (1),
et tout d'abord à l'aide de la pression saisie (P) on calcule une durée d'injection selon la dose d'injection souhaitée et ensuite on commande de manière correspondante l'injecteur,
une erreur de dose d'injection (EMF) résultant de la différence entre la pression à l'instant de la commande de l'injecteur de carburant et la pression saisie pour le calcul de la durée d'injection,
**caractérisé en ce que**
la variation dans le temps de la pression dans la zone haute pression (1) est limitée par la commande de l'organe de réglage de pression (18) en fonction d'une erreur prédéfinie de dose d'injection (EMF).

**Fig. 1**

Fig. 2

Fig. 3

EP 1 488 090 B1

12,000

10,000

8,000

6,000

4,000

2,000

0,000

32

31

33

0,00  0,08  0,16  0,24  0,32  0,40  0,48  0,56  0,64  0,72  0,80  0,88  0,96  1,04  1,12  1,20  1,28

Fig. 4